# EUROPÄISCHE PATENTSCHRIFT

(11) **EP 1 510 275 B1**
(45) Veröffentlichungstag und Bekanntmachung des Hinweises auf die Patenterteilung: **30.11.2011**
(21) Anmeldenummer: 04019576.0
(22) Anmeldetag: 18.08.2004
(51) Int. Cl.: B23B 31/20, B23B 31/26, B23B 3/06, B23Q 1/26

(54) **Mittenantriebsmaschine**
Central drive machine tool
Machine outil à actionnement central

(30) Priorität: 29.08.2003 DE 10339913; 05.04.2004 DE 202004005569 U
(43) Veröffentlichungstag der Anmeldung: 02.03.2005
(73) Patentinhaber: Schuster Maschinenbau GmbH, 86920 Denklingen (DE)
(72) Erfinder: Schuster, Helmut, 86920 Denklingen (DE)
(74) Vertreter: Mollekopf, Gerd Willi

(56) Entgegenhaltungen:
- EP-A- 0 499 807
- EP-A- 1 034 881
- DE-A- 3 636 421
- DE-C1- 3 826 985
- GB-A- 237 009
- GB-A- 2 151 166

## Beschreibung

Die Erfindung betrifft eine Mittenantriebsmaschine.

Die DE 32 47 586 C2 beschreibt eine Horizontaldrehmaschine zur Beidendenbearbeitung mit einem offenen und angetriebenen Spannkopf. Der Spannkopf ist am Außenumfang mittels eines Radial- und Axiallagers gelagert und seitlich neben den Lagern ist ein umlaufender Zahnkranz angeordnet zum Antrieb mittels eines Riemens. Auf der Horizontaldrehmaschine ist beiden Enden eines eingespannten Werkstücks jeweils eine Werkzeugeinheit zur Bearbeitung der Enden zugeordnet. Zum Be- und Entladen des Rohlings und des fertig bearbeiteten Werkstücks ist jeweils eine Lade- und Entladevorrichtung zustellbar. Das Spannen des Werkstücks erfolgt durch geneigte Tellerlamellen, die durch Klemmen verbogen werden. Die Verbiegung der Lamellen erfolgt über die die Tellerlamellen umfassenden Schraubgewindehülsen, die durch axial zustellbare Betätigungseinrichtungen verdrehbar sind. Die Betätigungseinrichtungen müssen axial als separate Elemente zugestellt werden.

Die DE 38 26 985 C1 und DE 36 20 231 C1 offenbaren jeweils eine Horizontaldrehmaschine mit einem Mittenantrieb zur Beidendenbearbeitung eines Werkstücks. Das Werkstück wird drehbar in zwei Spannstockträgern gelagert, wobei mindestens einer der Spannstockträger angetrieben wird. Kurze Werkstücke können mit den nebeneinanderliegenden Spannstockträgern nicht an beiden Enden bearbeitet werden.

Der Spannfutterkopf der DE 41 05 688 C2 ist zur Montage in einem drehbar angetriebenen Gehäuse vorgesehen. Innerhalb des Spannfutterkopfes ist ein doppelter Spannsegmentsatz vorgesehen, der über ein Betätigungsorgan betätigbar ist. Das Klemmen bzw. Spannen eines Werkstücks erfolgt durch die Vorspannung von zwei Tellerfedern, nachdem das Betätigungsorgan gelöst wird. Bei Betätigen des Betätigungsorgans werden die Tellerfedern zusammengedrückt und zwei durch das Zusammendrücken verschiebbare Spannteile geben die Spannbackensegmente frei, so dass das Werkstück entnommen werden kann. Zur Betätigung des Betätigungsorgans ist außerhalb des Spannfutterkopfes eine Platte mit Bolzen angeordnet, wobei die Bolzen auf die Betätigungsorgane wirken und die Platte selbst durch eine außerhalb des Spannkopfes angeordnete Hydraulikeinrichtung gekippt wird.

Auch der Spannkopf der GB 21 51 166 A ist drehbar gelagert und ermöglicht eine Bearbeitung eines Werkstücks an beiden Enden. Auch hier wird ein doppelter Spannsegmentesatz mittels einer extern anzulegenden Betätigungseinrichtung bedient, wobei die Spannsegmente beider Sätze miteinander verbunden und beim Betätigen axial verschoben werden.

Es ist Aufgabe der Erfindung, eine Mittenantriebsmaschine zur beidseitigen Endenbearbeitung eines Werkstücks vorzusehen, die einen geringen Grundflächenbedarf benötigt. Weiterhin ist es Aufgabe der Erfindung, eine Anordnung von Vertikal-Bearbeitungsmaschinen mit flexiblem Werkstücktransport vorzusehen.

Diese Aufgaben werden durch eine Mittenantriebsmaschine nach Anspruch 1 und die Anordnung nach Anspruch 7 gelöst.

Die Mittenantriebsmaschine weist ein Maschinengestell und einen daran gelagerten Mittenantrieb auf. Der Mittenantrieb umfasst eine Einspanneinrichtung, wie beispielsweise ein Spannfutter zum Einspannen eines zu bearbeitenden Werkstücks, und die Einspanneinrichtung ist dreh- und antreibbar gelagert. Der Mittenantrieb ist als Einzelkopf ausgebildet, mit dem das zu bearbeitende Werkstück frei spannbar und antreibbar ist. Es ist keine weitere, separate Einspanneinrichtung erforderlich, um das Werkstück zu lagern und der Antrieb des Werkstücks kann ausschließlich durch den Einzelkopf erfolgen. Durch eine Betätigungseinrichtung des Mittenantriebs werden die Werkstücke automatisch eingespannt bzw. gelöst, so dass die Mittenantriebsmaschine in einem automatisierten Prozess einsetzbar ist. Es ist somit kein manuelles Lösen bzw. Klemmen des Werkstücks notwendig. Es können auch sehr kurze Werkstücke eingespannt und beidseitig drehend bearbeitet werden, da die axiale Ausdehnung des Einzelkopfes gering und kein weiterer Stütz- bzw. Antriebspunkt für das Werkstück erforderlich ist. Die Rotationsachse des Mittenantriebs ist vertikal ausgerichtet, so dass sich die größte Abmessung der Mittenantriebsmaschine in die Höhe erstreckt und so in einer Werkhalle nur eine reduzierte Grundfläche erforderlich ist. Bei der vertikalen Ausrichtung ist eine Verschmutzung der Werkzeuge und Aggregate durch Rückstände (Späne und Kühlmittel) deutlich verringert.

Bei einer starren Lagerung des Mittenantriebs am Maschinengestell entfallen bewegliche Lagerung bzw. Führung, so dass aufgrund der schwingungshemmenden Verbindung eine besonders präzise Bearbeitung des Werkstücks ermöglicht ist. Ist dagegen der Mittenantrieb in Richtung der Rotations- bzw. Bearbeitungsachse des Werkstücks verfahrbar, so kann zum Beispiel der Mittenantrieb über ein der Rotationsachse zugestelltes und an einem Ende gefasstes Werkstück verfahren werden, um dieses vorzugsweise mittig einzuspannen. Umgekehrt kann der Mittenantrieb nach dem Lösen von dem Werkstück weggefahren werden. Dabei ist es nicht notwendig, dass bei einer automatischen Zuführung das Werkstück in Achsrichtung dem Mittenantrieb zugeführt oder aus diesem entnommen wird, so dass sich beispielsweise eine axiale Verschiebeeinheit für eine Handhabungseinrichtung (siehe unten) einsparen lässt. Oder bei besonders langen Werkstücken wird der Zuführ- bzw. der Entnahmeweg des Werkstücks vom bzw. zum Mittenantrieb zwischen einer axial verfahrbaren Handhabungseinrichtung und dem Verfahrweg des Mittenantriebs aufgeteilt, so dass jeweils die Verschiebewege beider Einrichtungen kurz gehalten werden können. Entsprechendes trifft für Bearbeitungswerkzeuge oder Stützwerkzeuge zu, die durch die Verfahrbarkeit des Mittenantriebs gar nicht oder nur beschränkt verfahren werden müssen.

Zur Stabilisierung der Enden eines langen Werkstücks gegen Unwucht sind zumindest einem der Enden eine Pinole oder ein Dorn zustellbar bzw. bei verfahrbarem Mittenantrieb ist das Ende des Werkstücks zur Pinole oder dem Dorn hin verfahrbar. Vorteilhaft ist zumindest eine Pinole oder ein Dorn senkrecht oder schräg zur Rotationsachse von der Rotationsachse herausfahrbar und/oder herausschwenkbar, so dass insbesondere zur Entnahme eines langen Werkstücks der Weg der Entnahme bzw. der Zufuhrweg für das Werkstück zum Mittenantrieb frei ist.

Umfasst die Mittenantriebsmaschine zwei Pinolen, zwei Dorne oder einen Dorn und eine Pinole, so kann das Werkstück endseitig geklemmt und gehalten werden, während die Mittenantriebseinrichtung das Werkstück freigibt. Durch Verfahren des verfahrbaren Mittenantriebs oder der beiden Enden-Halteeinrichtungen kann der Mittenantrieb eine Umgreifaktion am Werkstück durchführen, so dass dieses an einem versetzten Umfangsbereich gespannt wird und beispielsweise im zuvor eingespannten Bereich an der Umfangsfläche weiter bearbeitet wird. Im Prinzip ist somit mit lediglich einer Mittenantriebsmaschine eine umfassende Oberflächen- bzw. Innenflächenbearbeitung am Werkstück möglich. Anstelle der Enden-Halteeinrichtung ist auch eine Handhabungseinrichtung zum temporären Halten des Werkstücks während des Umgreifens einsetzbar.

Ganz besonders vorteilhaft weist die Mittenantriebsmaschine zumindest eine Werkzeugeinheit auf, die sowohl dem ersten als auch dem zweiten Ende des eingespannten Werkstücks zustellbar ist. Durch den Einsatz des Einzelkopfes ist der zum Umfahren des Einzelkopfes notwendige Verfahrweg für die Werkzeugeinheit gering, so dass kostengünstig lediglich eine Werkzeugeinheit oder eine Spezialwerkzeugeinheit vorgesehen werden kann. Unabhängig von der beide Enden bearbeitenden Werkzeugeinheit können weitere Werkzeugeinheiten vorgesehen sein, die jeweils das obere oder das untere Ende des Werkstücks arbeitsteilig bearbeiten. Mit einer Werkzeugeinheit ist beispielsweise ein Ende eines Werkstücks am Umfang, an der Stirnfläche und/oder im Werkstückinnern bearbeitbar.

Vorteilhaft weist zumindest eine der Werkzeugeinheiten einen drehbar gelagerten Werkzeugrevolver zur Aufnahme mehrerer Werkzeuge umfasst. Weiterhin kann einer der Werkzeugrevolver eine Greifeinrichtung zum Greifen des Werkstücks aufweisen. Es ist vorteilhaft zumindest eine der Werkzeugeinheiten auf einer in Rotationsachsenrichtung und senkrecht zur Rotationsachsenrichtung verfahrbaren Verschiebeeinheit anzuordnen.

In Verbindung mit der verfahrbaren Mitteneinheit wird es ermöglicht, dass zumindest eine Werkzeugeinheit in Rotationsachsenrichtung lagefest sein kann und beispielsweise lediglich eine Bewegung senkrecht zur Rotationsachse ausführt, während der Vorschub in Rotationsachsenrichtung durch Verfahren des Mittenantriebs erfolgt. So kann an einem Ende ein Linearantrieb für die Werkzeugeinheit in Achsrichtung eingespart werden. Während des Bearbeitens des einen Endes mit der axial festgelegten Werkzeugeinheit kann eine die Bewegung des Mittenantriebs kompensierende, axial verfahrbare Werkzeugeinheit das andere Ende des Werkstücks bearbeiten.

Vorteilhaft erfolgt das Zuführen bzw. Entnehmen des Werkstücks vom Mittenantrieb mittels einer Handhabungseinrichtung, die einen Greifer aufweist. Wie oben erwähnt, kann die Handhabungseinrichtung in Rotationsachsenrichtung verfahrbar sein, um das Werkstück beispielsweise bei dem starr mit dem Maschinenrahmen verbundenen Mittenantrieb zu entnehmen. Oder die Handhabungseinrichtung kann aus Kostengründen in axialer Richtung festgelegt sein, so dass der verfahrbare Mittenantrieb nach Greifen des Werkstücks durch die Handhabungseinrichtung über das Werkstück weggefahren wird, bis dieses für die Handhabungseinrichtung freigegeben ist. Die Handhabungseinrichtung braucht in diesem Fall beispielsweise lediglich eine Schwenk- oder Drehbewegung zur Zuführung bzw. Entnahme des Werkstücks von bzw. zu der Rotationsachse ausführen. Vorteilhaft kann die Handhabungseinrichtung in eine der Werkzeugeinheiten, beispielsweise einen drehbar gelagerten Werkzeugrevolver, integriert sein, so dass ein gemeinsamer Linearantrieb in Rotationsachsenrichtung und/oder ein gemeinsamer Antrieb mit einer senkrechten Komponente zur Rotationsachse für beide ausreicht.

Vorteilhaft wird das bearbeitete Werkstück mittels einer Handhabungseinrichtung zu einer weiteren Bearbeitungsmaschine überführt. Die Handhabungseinrichtung kann das bearbeitete Werkstück dort in einen Werkstückhalter zur Bearbeitung überführen oder an eine weitere Handhabungseinrichtung der weiteren Bearbeitungsmaschine übergeben oder zu einer Werkstückausgabe und/oder zu einer Werkstück-Prüfstation. Vorteilhaft sind der Mittenantriebsmaschine zwei Handhabungseinrichtungen zugeordnet, wobei eine erste das unbearbeitete Werkstück zuführt und eine zweite das bearbeitete Werkstück abführt.

Die Anordnung von nebeneinander stehenden Vertikal-Bearbeitungsmaschinen umfasst eine zwischen den Bearbeitungsmaschinen angeordnete Handhabungseinrichtung zum Transport eines Werkstücks zwischen den beiden Bearbeitungsmaschinen. Die Handhabungseinrichtung ist auf einer zwischen den Bearbeitungsmaschinen verfahrbaren Verschiebeeinheit angeordnet. Die Verschiebeeinheit ist zumindest in horizontaler Richtung verfahrbar und ermöglicht die Überbrückung auch großer Distanzen zwischen den Bearbeitungsbereichen der Bearbeitungsmaschinen. Aufstellungsbedingte Distanzabweichungen zwischen den Bearbeitungsmaschinen sind durch Anpassung des Fahrwegs der Verschiebeeinheit leicht anpassbar. Vorzugsweise weist die Handhabungseinrichtung einen horizontal schwenkbaren Greifarm auf, der in vorteilhafter Weiterbildung auch eine Drehung des Werkstücks um die Greifarmachse ermöglicht. Vorteilhaft ist zum Zuführen des Werkstücks zur ersten Bearbeitungsmaschine und/oder zum Entnehmen des Werkstücks aus der letzten Bearbeitungsmaschine jeweils eine vorgeschaltete und/oder nachgeschaltete Handhabungseinrichtung mit horizontaler Verschiebeeinheit vorgesehen.

In Ausgestaltung kann mit einer zweiten Handhabungseinrichtung ein Werkstück zur ersten Bearbeitungsmaschine zugeführt und/oder mit einer dritten Handhabungseinrichtung ein Werkstück aus der zweiten Bearbeitungsmaschine entnommen werden. Vorteilhaft sind die zweite und/oder dritte Handhabungseinrichtung auf einer zumindest horizontal verfahrbaren Verschiebeeinheit angeordnet.

Im Spannfutterkopf ist eine Haupthülse bzw. Hauptspindel an zwei voneinander axial beabstandeten Lagern drehbar gelagert, so dass eine hohe radiale Stabilität des Spannkopfes bei der Bearbeitung eines Werkstücks gewährleistet ist. Weiterhin ist eine Betätigungseinrichtung zum Betätigen zumindest eines Spannsegmentsatzes eines Spannfutters zwischen den beiden Lagern oder im Bereich der beiden Lager angeordnet, d.h. zumindest die Hauptelemente der Betätigungseinrichtung. Dabei ist die Betätigungseinrichtung über die axiale Bauhöhe des Spannkopfes verbaut, also in Höhe der zur Lagerung notwendigen Axialabmessung seitlich zur Rotationsachse angeordnet. Zum automatischen Öffnen (oder Schließen) des Spannfutters ist es somit nicht notwendig, Elemente des Betätigungsmechanismus in axialer Verlängerung des Spannfutterkopfes vorzusehen oder zum Öffnen eine separate Betätigungseinrichtung seitlich des Spannfutterkopfes in axialer Richtung beizustellen. Der erfindungsgemäße Spannfutterkopf erlaubt somit bei geringer axialer Bauhöhe eine volle Automatisierung eines Werkstückwechsels. Besonders wenn nur ein Spannsegmentsatz vorgesehen ist, wird eine Beidenden-Bearbeitung sehr kurzer Werkstücke ermöglicht.

Das Spannfutter kann frei drehbar gelagert sein oder mittels eines Antriebs angetrieben sein, beispielsweise durch einen die Haupthülse antreibenden Motor. Bei Einsatz in der unten beschriebenen Mittenantriebsmaschine ist das Spannfutter mittels eines Antriebsaggregats angetrieben.

Ganz besonders vorteilhaft weist das Spannfutter zum Einspannen eines zu bearbeitenden Werkstücks zwei getrennte Sätze von Spannsegmenten auf, die jeweils den Umfang des Werkstücks an voneinander beabstandeten Umfangsbereichen klemmen. Durch das Einspannen in zwei axial voneinander beabstandeten Umfangsbereichen setzt das Spannfutter während der Bearbeitung des Werkstücks einer radialen Auslenkung ein hohes Hebelmoment entgegen, so dass eine besonders präzise Bearbeitung unter hohen radialen Kräften auf das Werkstück ermöglicht wird. Die beiden Spannsegmentsätze sind mittels der Betätigungseinrichtung gemeinsam zum Öffnen und/oder zum Spannen des Werkstücks zu betätigen. Auch bei doppeltem Spannsegmentsatz ist die axiale Bauhöhe minimal, so dass die Endenbearbeitung über einen weiten Endenbereich ermöglicht wird.

Vorteilhaft wirkt das zumindest eine Federelement zwischen oder im Wesentlichen zwischen den beiden Spannsegmentsätzen, d.h. die Federkraft in die eine Richtung wirkt nahezu vollständig auf den ersten Spannsegmentsatz und die Federkraft in die andere Richtung (Gegenkraft) wirkt nahezu vollständig auf den zweiten Satz Spannsegmente. Dies erlaubt ein asynchrones Schließen und Öffnen der Spannsegmente, so dass das Werkstück am ersten Umfangsbereich einen anderen Durchmesser aufweisen kann als am zweiten Umfangsbereich (beispielsweise leicht konisches Werkstück).

Bei Einsatz einer Tellerfeder als Federelement werden sehr hohe Federkräfte bei vergleichsweise geringer, axialer Baulänge des Federelements bereitgestellt. Weiterhin erlaubt die Tellerfeder eine in Umfangsrichtung gleichmäßig verteilte Federkraft, die auf alle Spannsegmente eines Satzes wirkt, so dass ein einseitiges Wirken der Federkraft und damit ein Verkanten beim Schließen oder Öffnen der Spannsegmente vermieden wird. Vorteilhaft sind beide Spannsegmentsätze in einer Haupthülse angeordnet, wobei die Haupthülse drehbar am Spannkopf gelagert ist und so die Spannsegmente mechanisch stabil ausrichtet.

Bei einer Ausführung ist das Federelement außerhalb der Haupthülse angeordnet, so dass der Hülsendurchmesser gering gehalten werden kann, was insgesamt einen kompakt gebauten Spannfutterkopf ermöglicht, der vorzugsweise zur Bearbeitung von Werkstücken mit geringem Durchmesser eingesetzt wird. Hier wirkt dann ein Mitnehmerelement der Betätigungseinrichtung auf die Spannsegmente, wobei das zumindest eine Mitnehmerelement durch die Haupthülse greift. Ist dagegen in einer anderen Ausführung das zumindest eine Federelement innerhalb der Haupthülse angeordnet, so sind keine Hebel oder Mitnehmer erforderlich, die zwischen der Feder und den Spannsegmenten wirken. Diese Anordnung, bei der der Hülsendurchmesser im Vergleich zum Außenaufbau der Feder einen größeren Durchmesser erfordert, kommt bevorzugt bei Werkstücken mit größerem Durchmesser zum Einsatz. Bei außenliegendem Federelement wirkt ein Aktuator der Betätigungseinrichtung direkt auf das Federelement oder bei innenliegendem Federelement wirkt der Aktuator über zumindest einen die Haupthülse durchgreifenden Mitnehmer auf das Federelement.

Vorteilhaft ist der Aktuator mit einem Gehäuse des Spannfutterkopfs bzw. einem Befestigungspunkt des Spannfutterkopfs verbunden, so dass der Aktuator selbst keine Drehbewegung ausführt und die Kraft zum Spannen oder Dehnen der Feder nicht über eine Drehverbindung übertragen werden muss. Der auf das Federelement wirkende und ortsfeste Aktuator kann vorteilhaft Bremselemente aufweisen, die auf das Federelement oder ein Verbindungselement zwischen Aktuator und Federelement wirken, so dass nach Abschaltung des Antriebs die Drehung der Haupthülse mit dem Werkstück durch Betätigung des Aktuators abgebremst wird und die Werkstückentnahme schneller erfolgen kann. Alternativ oder zusätzlich zum Bremsen mittels des Aktuators kann auch eine Arretierung der Hülse in einer vorgegebenen Position erfolgen, so dass ein vorgegebener Drehlagebezug zwischen zu bearbeitendem Werkstück und Spannfutter hergestellt werden kann.

Wird an einer Seite, vorzugsweise an beiden Seiten des Spannfutters, ein austauschbarer Spannsegmentsatz vorgesehen, so können verschiedene, austauschbare Spannsegmentsätze in Abhängigkeit des Durchmessers des Werkstücks mit verschiedenen Spanndurchmesserbereichen eingesetzt werden. Damit lässt sich ein Spannfutterkopf kostengünstig an verschiedene Durchmesserbereiche der zu bearbeitenden Werkstücke anpassen.

Besonders vorteilhaft ist zumindest eine Seite der Haupthülse mittels eines axialen Aufsatzes verlängerbar und in diesem Aufsatz ein neuer oder der zuvor entnommene Spannsegmentsatz einsetzbar, so dass auch längere Werkstücke bei Vorsehen eines größeren axialen Hebels durch das Einspannen an beiden Umfangsflächen präzise bearbeitbar sind. Durch Austausch weniger Elemente ist der Spannfutterkopf flexibel in Abhängigkeit der Abmessung des Werkstücks und des Bearbeitungsbedarfs kostengünstig umzurüsten.

Nachfolgend wird auch ein Spannfutterkopf näher beschrieben, der eine Fluidzufuhr aufweist, mit der ein Fluid in zumindest ein Spannfuttersegment eines Spannfutters zuführbar ist, wo es von einer Innenfläche des Spannfuttersegments in eine Öffnung eines Werkstücks einströmen kann. Dadurch können beispielsweise Rückstände in einer Öffnung des Werkstücks ausgespült werden.

Anhand von Zeichnungen werden Ausführungsbeispiele der Erfindung näher erläutert. Es zeigen:
- Fig. 1A-1D: Seitenansichten einer Mittenantriebsmaschine in schematisch dargestellten, verschiedenen Abschnitten eines Arbeitszyklus,
- Fig. 2: eine Querschnittsansicht eines Spannkopfes mit Doppelfutter,
- Fig. 3A-3C: verschiedene Ansichten einer Druckhülse des Spannkopfes von Fig. 2,
- Fig. 4: eine Spindelwelle des Spannkopfes von Fig. 2,
- Fig. 5: ein Schiebesegment des Spannkopfes von Fig. 2,
- Fig. 6: den Spannkopf von Fig. 2 mit einem axialen Verlängerungsanbau,
- Fig. 7: eine Frontansicht der Mittenantriebsmaschine von Fig. 1,
- Fig. 8: eine Draufsicht auf eine Bearbeitungsstraße mit der Mittenantriebsmaschine,
- Fig. 9: eine Querschnittsansicht einer weiteren Ausführungsform eines Spannkopfes mit Einfachspannfutter,
- Fig. 10: verschiedene Ansichten einer Hauptspindel des Spannfutterkopfes von Fig. 9 und
- Fig. 11: verschiedene Ansichten einer Innenhülse des Spannfutterkopfes von Fig. 9.

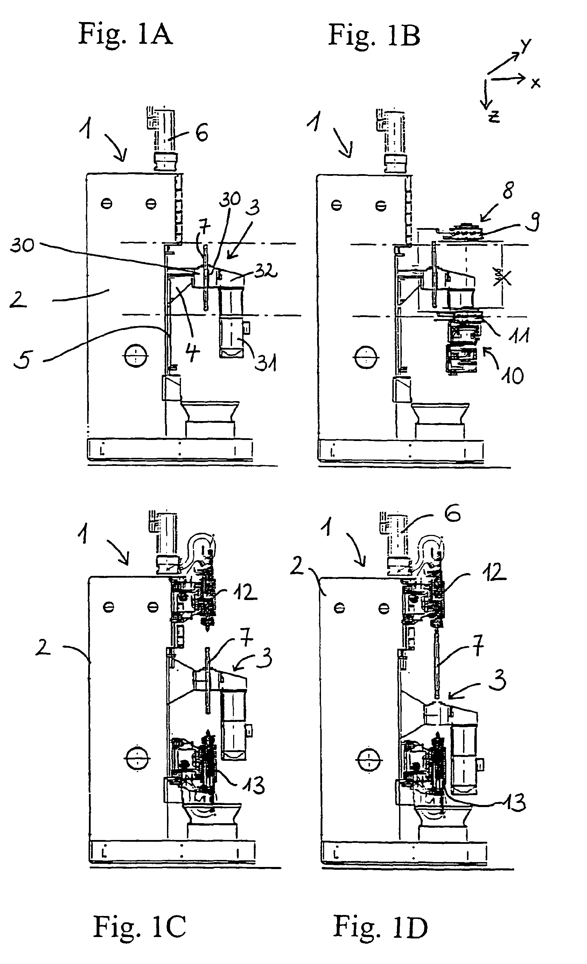

Die Fig. 1A-1D zeigen Seitenansichten einer Vertikal-Mittenantriebsmaschine 1. Das im Folgenden beschriebene Konzept der Mittenantriebsmaschine ist ohne weiteres auch für eine Horizontal-Mittenantriebsmaschine mit horizontal verlaufender Rotationsachse des Werkstücks 7 anwendbar, wobei jedoch der Grundflächenbedarf der Maschine erhöht ist.

Das Maschinenbett des Maschinengrundkörpers 2 der Mittenantriebsmaschine 1 in Fig. 1 baut vertikal in die Höhe, so dass eine Werkzeugwartung von vorne (von rechts wie in Fig. 1 dargestellt) möglich ist, auch wenn mehrere Bearbeitungsmaschinen seitlich aneinandergereiht sind. Der Maschinengrundkörper 2 umfasst vorzugsweise einen Mineralgusskern, der Schwingungen von der Werkhalle zum Bearbeitungsbereich und umgekehrt optimal dämpft. Ein Mittelaggregat 3 zum beidseitig offenen Einspannen eines Werkstücks 7 ist an einer Konsole 4 gelagert. Die Konsole 4 wiederum lagert linear verfahrbar auf einer Linearführung 5. Mittels eines Antriebs 6 wird die Konsole 4 entlang der Linearführung 5 vertikal verfahren, so dass die vertikale Position des Mittelaggregats 3 veränderbar ist. In einer alternativen, hier nicht dargestellten Ausführung ist das Mittelaggregat 3 starr an den Maschinengrundkörper angekoppelt, so dass Schwingungen während einer hochpräzisen Bearbeitung noch weiter verringert sind.

Das Mittelaggregat 3 umfasst einen Spannkopf 30 zum Einspannen des Werkstücks 7, einen Antrieb 31 zum Antreiben des Werkstücks 7 und einen Winkelflansch 32, der den Antrieb 31 mit dem Spannkopf 30 verbindet. In weiterer, hier nicht dargestellter Ausführung kann der Antrieb für den Spannkopf auch am Maschinengrundkörper 2 gelagert sein und über ein Getriebe (mit beispielsweise einer Spindel) mit dem Spannkopf 30 verbunden sein.

In Fig. 1B sind schematisch eine erste Werkzeugeinheit 8 mit einem Werkzeugrevolver 9 und eine zweite Werkzeugeinheit 10 mit einem Werkzeugrevolver 11 dargestellt. Das Richtungs-Dreibein in Fig. 1B deutet die Richtungen an, auf die im Folgenden Bezug genommen wird. Dabei ist die Z-Richtung die Vertikalachse, die X-Richtung verläuft horizontal frontal zur Mittenantriebsmaschine 1 (horizontal und in der Zeichenebene) und die Y-Richtung verläuft horizontal und in Seitenrichtung zur Mittenantriebsmaschine 1 (horizontal und senkrecht zur Zeichenebene). Die erste Werkzeugeinheit 8 ist in Y-Richtung seitlich hinter die Mittelebene des Mittelaggregats 3 versetzt und führt mittels einer Verschiebeeinheit eine Y- und Z-Bewegung aus. Die zweite Werkzeugeinheit 10 ist in Y-Richtung zur Zeichenebene (Mittelebene des Mittelaggregats) nach vorne versetzt und führt ebenfalls eine Y-, Z-Bewegung mittels einer Verschiebeeinheit aus. In alternativer Ausführung können die erste und/oder zweite Werkzeugeinheit 8, 10 in Z-Richtung unbeweglich festgelegt sein, wobei dann durch Z-Verschiebung des Mittelaggregats 3 relativ zur ersten und/oder zweiten Werkzeugeinheit 8, 10 die Bewegung zur axialen Bearbeitung des Werkstücks 7 ausgeführt wird.

In weiterer, hier nicht dargestellter Ausführung ist eine Werkzeugeinheit zur Beidenden-Bearbeitung vorgesehen. Dieses Einzelaggregat kann ebenfalls einen Werkzeugrevolver umfassen und in Z-Richtung starr am Maschinengrundkörper 2 festgelegt oder vorzugsweise verfahrbar sein. Die Z-Bewegung wird dann entweder durch Verfahren des verfahrbaren Mittelaggregats 3 oder des Einzelaggregats ausgeführt. Die relative Verfahrstrecke ist dabei so bemessen, dass mit dem Einzelaggregat sowohl das obere als auch das untere Ende des Werkstücks 7 bearbeitbar sind. Da insbesondere in Y-Richtung die Abmessung des Mittelaggregats 3 sehr gering ist, kann das Einzelaggregat durch geringes Zurückfahren in Y-Richtung dem Mittelaggregat 3 ausweichen, so dass entweder das Mittelaggregat 3 am Einzelaggregat vorbeifährt oder das Einzelaggregat am Mittelaggregat vorbeifährt. Ein Werkzeugrevolver des Einzelaggregats umfasst dabei zusätzlich Überkopf-Werkzeuge, die ein Bearbeiten von unten nach oben ermöglichen, während die anderen Werkzeuge der Bearbeitung von oben nach unten dienen.

Die erste und zweite Werkzeugeinheit 10, 11 sowie das Einzelaggregat, soweit in Z-Richtung verfahrbar, lagern auf einem Schlitten, der auf einer nicht dargestellten Führung parallel zur Führung 5 verfahrbar ist. Dabei können die Werkzeugeinheiten und/oder das Einzelaggregat auf einer links oder rechts zur Führung 5 angeordneten, gemeinsamen Führung oder auf zwei links und rechts der Führung 5 liegenden Führungen lagern.

Fig. 1C stellt eine erste und zweite Pinole 12, 13 dar, die auf der Achse des Werkstücks 7 liegen und vorzugsweise in Z-Richtung verfahrbar sind. Vorteilhaft sind dabei die Pinolen 12, 13 auf der Linearführung 5 des Mittelaggregats 3 gelagert. In weiterer, nicht dargestellter Ausführung kann anstelle einer oder beider Pinolen ein Dorn zum Halten des Endes des Werkstücks 7 vorgesehen sein. Besonders bei der Umfangsbearbeitung langer Werkstücke werden die freien Enden des Werkstücks einseitig oder beidseitig durch die Pinolen 12, 13 abgestützt, so dass Unwuchten bei der Bearbeitung vermieden werden. Auch hier können in Ausgestaltung das Mittelaggregat 3 in Z-Richtung festgelegt sein, wobei dann beide Pinolen 12, 13 in Z-Richtung zustellbar sind. Oder eine Pinole 12 oder 13 ist in Z-Richtung festgelegt und das Mittelaggregat 3 mit dem Werkstück 7 werden der festgelegten Pinole zugestellt und die gegenüberliegende verfahrbare Pinole wird dem anderen Ende des Werkstücks zugestellt.

Fig. 1D zeigt die Maschine 1 in einer Stellung, bei der besonders lange Werkstücke 7 durch Absenken des Mittelaggregats 3 aus diesem herausgeführt werden. Durch eine nicht dargestellte Handhabungseinrichtung wird in diesem Fall das Werkstück 7 mittels eines Greifers gefasst, so dass nach Lösen des Spannkopfes 30 und Absenken des Mittenaggregats das Werkstück 7 frei ist und lediglich von der Handhabungseinrichtung gehalten wird. In der in Fig. 1C dargestellten Position kann die Handhabungseinrichtung das Werkstück 7 durch Schwenken oder Zurückfahren aus dem Bearbeitungsbereich herausnehmen oder zum Beladen das Werkstück 7 in die Bearbeitungsachse fahren.

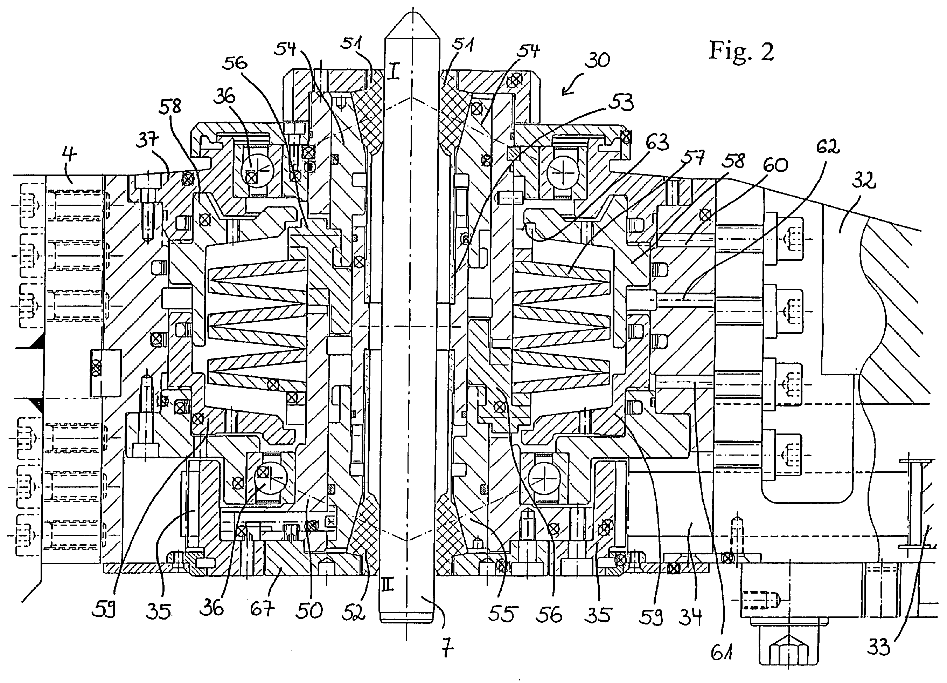

Fig. 2 zeigt in Querschnittsansicht den Spannkopf 30. Im Winkelflansch 32 ist ein Zahnrad 34 drehbar gelagert, das durch ein Motorritzel 33 des Antriebs 31 angetrieben wird. Das Zahnrad 34 greift in einen Außenzahnkranz 35, der an einer drehbar gelagerten Spindelwelle 50 angeordnet ist. Die Spindelwelle 50 lagert über zwei Kugellager 36 am Spannfuttergehäuse 37. Innerhalb der Spindelwelle 50 sind ein erstes und zweites Spannfutter 51, 52 angeordnet, die axial beabstandet das Werkstück 7 an zwei Umfangsbereichen I, II klemmen. Die Spannfutter 51, 52 sind hülsenartig als Spannfutterhülse 53 ausgebildet, wobei der untere Teil (bezogen auf das Spannfutter 51) umlaufend ausgebildet ist, während die Klemmsegmente im oberen Bereich der Hülse 53 geschlitzt sind. Durch die geschlitzte Hülse ergibt sich durch den zungenartigen Mittenbereich der Spannfutterhülse eine Federwirkung, die beim Rückziehen der die Klemmsegmente betätigenden Druckhülsen 54, 55 die Öffnung zwischen den Klemmsegmenten weitet.

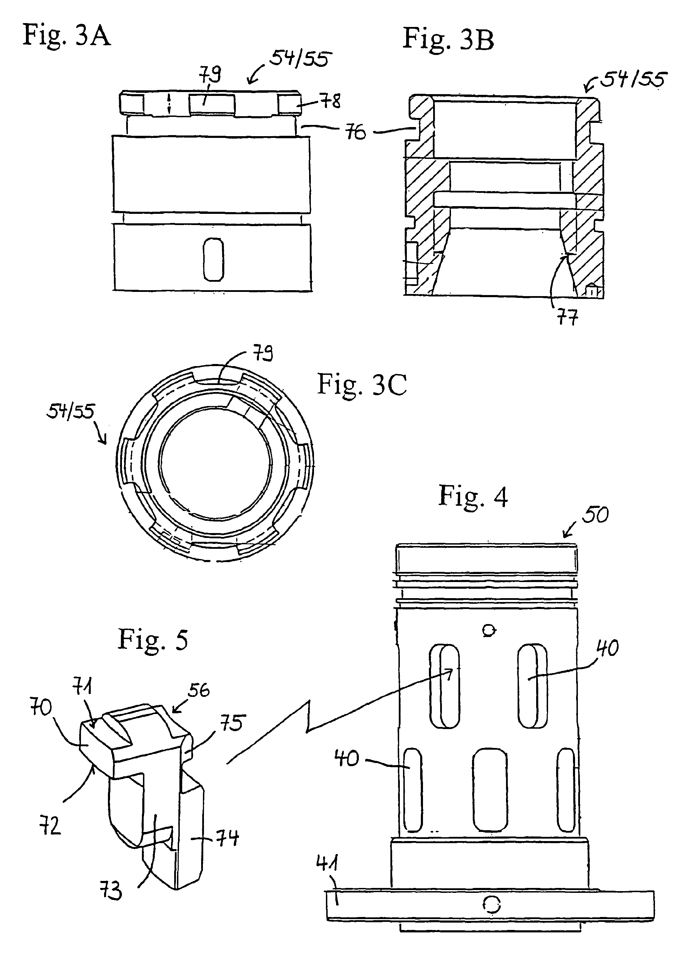

Die außenseitige (Teil-)Kegelflächen jedes Spannfuttersegments 51, 52 wirkt mit der innen liegenden Konusfläche der ersten bzw. zweiten Druckhülse 54, 55 zusammen, wobei zum Öffnen und Schließen der Segmente die Druckhülsen 54, 55 axial verschoben werden. Die Druckhülsen 54, 55 sind gleitend an der Innenseite der Spindelwelle 50 bzw. Haupthülse gelagert. Die Verschiebung der ersten und zweiten Druckhülse 54 und 55 erfolgt durch Segmente 56, die durch axiale Schlitze 40 in der Spindelwelle 50 hindurchgreifen (siehe Fig. 4). Ein oberer Satz Segmente 56 ist der ersten Druckhülse 54 zugeordnet und ein unterer Satz Segmente 56 ist der zweiten Druckhülse 55 zugeordnet.

An der Außenseite der Spindelwelle 50 lagert eine Tellerfeder 57, die zwischen dem oberen und dem unteren Satz Segmente 56 eingespannt ist und unter Vorspannung den oberen Satz Segmente 56 und unteren Satz Segmente 56 auseinander schiebt. Auf den oberen Satz von Segmenten 56 wirkt ein erstes Hubelement 58 und ein zweites Hubelement 59 wirkt auf den unteren Satz von Segmenten. Die Hubelemente 58, 59 sind hier topfförmig ausgebildet, wobei deren Außenränder übereinander verschiebbar sind. Die Hubelemente 58, 59 sind axial verschiebbar am Spannfuttergehäuse 37 gelagert und durch Zusammenfahren der Hubelemente 58, 59 gegeneinander kommt eine Anlagefläche 63 am inneren Bereich der Hubelemente 58, 59 auf den Segmenten 56 zu liegen, so dass bei weiterem Zusammenfahren der Hubelemente 58, 59 gegeneinander der obere Satz von Segmenten 56 gegenüber dem unteren Satz von Segmenten gegen die Federwirkung zusammengeschoben wird.

Zum Betätigen der Hubelemente 58, 59 wird durch einen ersten Fluideinlass 60 und einen zweiten Fluideinlass 61 Hydrauliköl in einen Hohlraum zwischen den Hubelementen 58, 59 und dem Spannfuttergehäuse 37 eingeleitet, so dass das erste Hubelement 58 nach unten und das zweite Hubelement 59 nach oben verschoben wird. Beim Zusammenfahren wird durch einen dritten Fluideinlass 62 Hydrauliköl ausgelassen. Zum Auseinanderfahren der Hubelemente 58, 59 werden der erste und zweite Fluideinlass 60, 61 druckfrei geschaltet und durch den dritten Fluideinlass 62 Hydrauliköl unter Druck eingepresst, so dass die beiden Hubelemente 58, 59 aufgrund des Drucks im Hohlraum zwischen den beiden Hubelementen 58, 59 und dem Spannfuttergehäuse 37 auseinander gefahren werden. Bei einer weiteren, hier nicht dargestellten Ausführung kann der dritte Fluideinlass 62 entfallen und zum Auseinanderfahren der Hubelemente 58, 59 wird ebenfalls die Vorspannkraft der Tellerfeder 57 genutzt, wobei jedoch kein vollständiges Lösen zwischen den Segmenten 56 und der Anlagefläche 63 der Hubelemente 58, 59 erfolgt. Weiterhin kann vorgesehen werden, dass lediglich durch den ersten oder zweiten Fluideinlass 60, 61 Hydraulik eingeleitet und so entweder das erste oder das zweite Hubelement betätigt wird, so dass sich lediglich das erste oder zweite Spannfutter 51, 52 öffnet. Beispielsweise, wenn nur ein sehr kurzes Werkstück 7 durch nur einen Spannbackensatz 51, 52 einzuspannen ist. Ebenfalls kann bei einseitiger Festlegung der Tellerfeder 57 an der Spindelwelle 50 die Betätigung lediglich eines einzigen Spannfutters 51 durch nur ein Hubelement 58 oder 59 vorgesehen sein, wobei auch in diesem Fall eine Entkopplung der Führung des Hydrauliköls von den gedrehten Teilen erfolgt. Die in Fig. 2 dargestellte Anordnung ermöglicht es auch, ein Werkstück 7 mit unterschiedlichen Durchmessern im Bereich des ersten und des zweiten Spannfutters 51, 52 (Umfangsbereich I und II) zu fassen, da die Verschiebung des oberen Segmentsatzes und des unteren Segmentsatzes 56 eine Relativbewegung zueinander zulässt, d.h. eine bzgl. der Spindelwelle 50 asymmetrische Verschiebebewegung.

Die Fig. 3A-3C zeigen eine Seitenansicht, eine Querschnittsansicht und eine Draufsicht (bzgl. der Darstellung in Fig. 3A) der Druckhülsen 54, 55. Im oberen Bereich der Druckhülse ist eine umlaufende Nut 76 ausgebildet. An der unteren Innenseite ist ein Trichter bzw. eine Konusfläche 77 ausgebildet, die wie oben beschrieben mit dem kegelflächigen Rückseite der Spannfutter-Klemmsegmente 51, 52 zusammenwirkt. Der obere Kranz der Druckhülse 54, 55 ist als bajonettförmige Verriegelung 78 mit Aussparungen 79 ausgebildet.

Fig. 4 zeigt eine Seitenansicht der Spindelwelle 50, an deren innerem Umfangsbereich zwei Kränze mit Längsschlitzen 40 ausgebildet sind. Am Umfang sind hier im oberen und unteren Mittenbereich jeweils sechs Segmentschlitze 40 für den oberen Satz von sechs Segmenten 56 und den unteren Satz von Segmenten ausgebildet. Die Segmente 56 sind innerhalb der Schlitze 40 axial verschiebbar. Am unteren Ende der Spindelwelle 50 ist ein Flansch 41 vorgesehen, an dem der Außenzahnkranz 35 angeflanscht wird.

Fig. 5 zeigt eine perspektivische Ansicht eines der zwölf verwendeten Segmente, das wie durch den Pfeil angedeutet in einen Segmentschlitz 40 der Fig. 4 eingesetzt wird. Nach dem Einsetzen liegt der Grundkörper 73 innerhalb eines Segmentschlitzes 40 und über die Außenfläche der Spindelwelle 50 ragt eine Außennase 70 hervor, während an der Innenseite der Spindelwelle die Innenführung 74 und ein Vorsprung 75 hervorstehen. Der Vorsprung 75 greift nach dem Einsetzen der Druckhülse 54, 55 in deren Nut 76 ein. Zum Einsetzen der Druckhülsen nach Montage der Segmente 56 wird beim axialen Einlassen der Druckhülsen 54, 55 der Kranz der Verriegelung 78 an den Aussparungen 79 über die Vorsprünge 75 geführt. Durch Verdrehen der Druckhülsen 54, 55 greift dann der Vorsprung 75 in die Nut 76 ein, so dass eine Kopplung zwischen Segment und Druckhülse bei axialer Verschiebung gewährleistet ist. Bei der vom Außendurchmesser der Spindelwelle 50 hervorspringenden Außennase 70 wirkt auf eine dritte Auflagefläche 71 die erste Anlagefläche 63 des ersten bzw. zweiten Hubelements 58, 59, wobei die Segmente des oberen Segmentsatzes durch das erste Hubelement 58 nach unten verschoben werden, während die Segmente 56 des unteren Segmentsatzes durch das zweite Hubelement 59 nach oben verschoben werden. An der zweiten Anlagefläche 72 der Außennase 70 liegt die Tellerfeder an, die die Segmente 56 des oberen Satzes nach oben und die Segmente des unteren Satzes nach unten verschiebt.

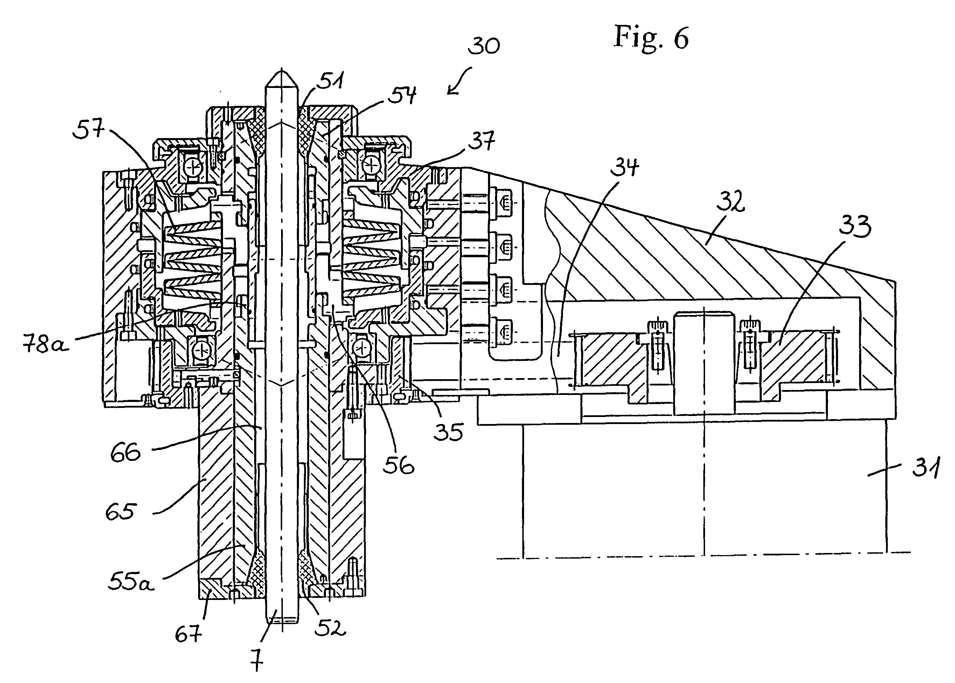

Fig. 6 zeigt eine Querschnittsansicht des Spannkopfes 30 von Fig. 2 mit einer an der Unterseite angebauten Verlängerung. Gegenüber der Fig. 2 ist der untere Deckel 67 vom Flansch 41 der Spindelwelle 50 abgeschraubt und anstelle des unteren Deckels 67 ist eine Verlängerungshülse 65 auf den Flansch 41 aufgesetzt. Anstelle der kurzen, zweiten Druckhülse 55 ist ein lange Druckhülse 55a eingesetzt, die sich bis zum Endbereich der Verlängerungshülse 65 erstreckt. Das untere zweite Spannfutter 52 ist aus der Spindelwelle 50 entnommen und in die Verlängerungshülse 65 eingesetzt. Die axiale Position des zweiten Spannfutters 52 wird durch einen mit der Spindelwelle 5C verbundenen Stützschaft 66 und durch Aufschrauben des unteren Deckels 67 auf die Unterseite der Verlängerungshülse 65 festgelegt. Die lange Druckhülse 55a greift ebenfalls mit einer bajonettartigen Verriegelung 78a (entsprechend der 78 von Fig. 3A) in den unteren Segmentsatz 56 ein. Durch eine entsprechende Verlängerungshülse und eine verlängerte Druckhülse lässt sich der Spannkopf 30 auch an der Oberseite durch Nach-oben-Verlagerung des Spannfutters 51 verlängern.

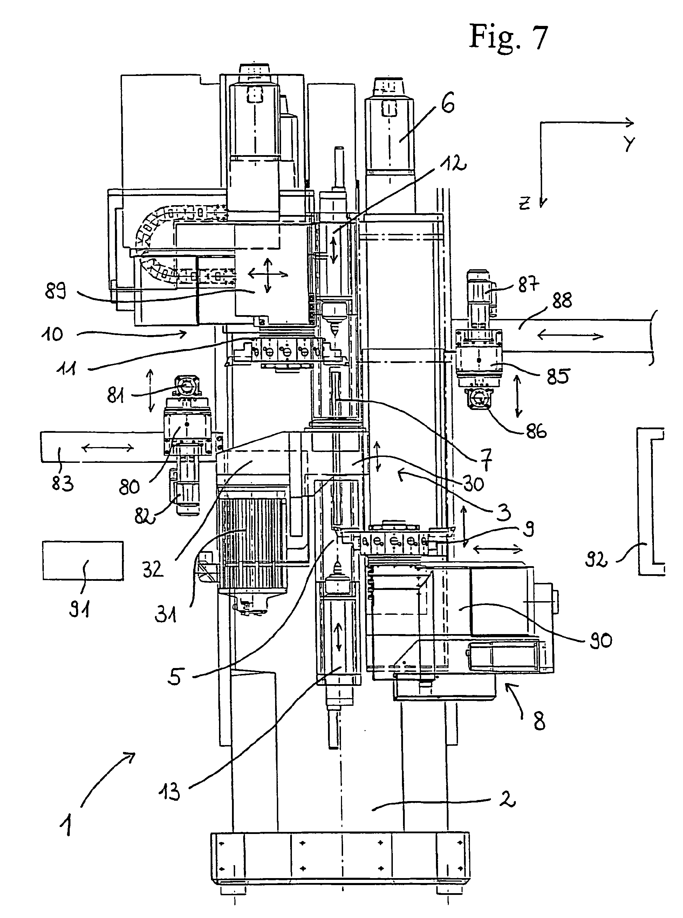

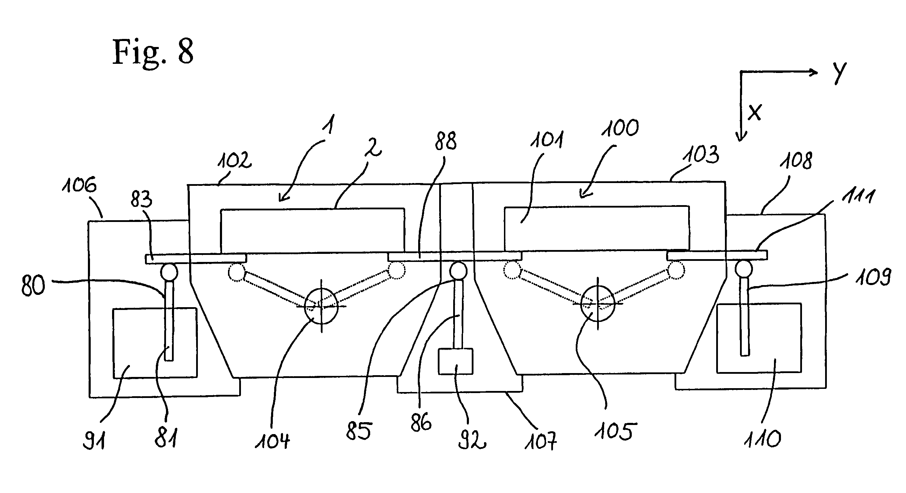

Fig. 7 zeigt eine Frontansicht der Vertikal-Mittenantriebsmaschine 1. Ergänzend zu den Fig. 1A-1D sind hier die oben erwähnten, erste und zweite Handhabungseinrichtungen 80, 85 dargestellt. Die erste Handhabungseinrichtung 80 ist in Y-Richtung links zur Bearbeitungszone des Mittelaggregats 3 versetzt, während die zweite Handhabungseinrichtung 85 rechts dazu versetzt ist. Beide Handhabungseinrichtungen 80, 85 sind mit einem Greifarm 81, 86 bestückt, der in der Darstellung von Fig. 7 in Betrachtungsrichtung steht. Die Greifarme sind in der Aufsicht von Fig. 8 dargestellt. An den Enden beider Greifarme 81, 86 ist jeweils eine Greifeinrichtung angeordnet, die optional neben der Schwenkbewegung des Greifarms um die Z-Achse auch eine Rotation um die Greifarmachse ermöglicht. Gegenüberliegend zum Greiflager ist jeweils ein Antrieb 82, 87 für die Schwenkbewegung des Greifarms und die optionale Rotation der Greifeinrichtung vorgesehen. Beide Handhabungseinrichtungen 80, 85 sind jeweils auf einer YZ-Verschiebeeinheit 83, 88 gelagert, mit der die Handhabungseinrichtung 80, 85 in Z- und Y-Richtung verfahrbar ist (die Koordinaten sind rechts oben in der Figur dargestellt). Wie oben bereits erwähnt, lagern die erste Werkzeugeinheit 8 und die zweite Werkzeugeinheit 10 ebenfalls jeweils auf einer YZ-Verschiebeeinheit 89, 90. Damit kann der jeweilige Werkzeugrevolver 9, 11 in Z- und Y-Richtung zur Endenbearbeitung dem Werkstück zugestellt werden.

Die Antriebe der unteren Handhabungseinrichtung 80 und der unteren Werkzeugeinheit 8 bauen bezüglich des Greif- bzw. Arbeitsraums nach unten, während die Antriebe der oberen Handhabungseinrichtung 85 und der oberen Werkzeugeinheit 10 bezüglich deren Greif- bzw. Arbeitsraum nach oben bauen. Dadurch können die Greif- und Bearbeitungszonen sehr dicht beieinander liegen bzw. sind die notwendigen Ausweichwege sehr kurz, was sehr kurze Taktzeiten auch bei kleinen Werkstücken ermöglicht. In bevorzugter Ausgestaltung und wie in Fig. 1 dargestellt, ist der Antrieb 31 des Mittelaggregats zur Bearbeitungszone 102 nach vorne versetzt (aus der Zeichenebene der Fig. 7 heraus). Der Antrieb kann jedoch wie in Fig. 7 dargestellt alternativ nach vorne bauen.

Die erste Handhabungseinrichtung 80 belädt den Spannkopf 30 mit Werkstücken 7 aus einem Werkstückmagazin 91. Die zweite Handhabungseinrichtung 85 entnimmt das in der Mittenantriebsmaschine bearbeitete Werkstück 7 aus dem Spannkopf 30 und überführt das Werkstück 7 zunächst zu einer Kontrollstation 92, in der Prüfmessungen am Werkstück vorgenommen werden.

Fig. 8 zeigt schematisch die Einbindung der Mittenantriebsmaschine 1 in eine Bearbeitungsstrasse. Die Beschickung der Mittenantriebsmaschine 1 zur Endenbearbeitung der Werkstücke 7 erfolgt aus einer Bestückungszelle 106, in der das Werkstückmagazin 91 angeordnet ist. Die erste Handhabungseinrichtung 80 verfährt auf der YZ-Verschiebeeinheit 83 zwischen der Bestückungszelle 106 und einer ersten Bearbeitungszelle 102, die die Mittenantriebsmaschine 1 abschirmt. Die YZ-Verschiebeeinheit 83 ist am Maschinengrundkörper 2 der Mittenantriebsmaschine 1 gelagert. Nach der Entnahme des Werkstücks aus dem Werkstückmagazin 91 wird dieses durch die erste Handhabungseinrichtung 80 zur ersten Bearbeitungszone 104 in der ersten Bearbeitungszelle 102 überführt. Nach der Endenbearbeitung entnimmt die zweite Handhabungseinrichtung 85 das bearbeitete Werkstück aus der ersten Bearbeitungszone 104 und überführt es durch Verfahren mittels der YZ-Verschiebeeinheit 88 von der ersten Bearbeitungszelle 102 zu einer Kontrollzelle 107. In der Kontrollzelle 107 werden optional Prüfmessungen am bearbeiteten Werkstück 7 in der Kontrollstation 92 durchgeführt. Das Werkstück wird dann von der Kontrollzelle 107 in eine zweite Bearbeitungszelle 103 überführt, in der hier beispielhaft eine Mittenbearbeitungsmaschine 100 abgeschirmt ist. In einer zweiten Bearbeitungszone 105 wird dann von der Mittenbearbeitungsmaschine 100 die Bearbeitung des Werkstücks 7 im mittleren Abschnitt durchgeführt, in dem das Werkstück zuvor bei der Bearbeitung durch die Mittenantriebsmaschine 1 eingespannt war. Wie dargestellt, ist die YZ-Verschiebeeinheit 88 der zweiten Handhabungseinrichtung 85 sowohl am Maschinengrundkörper 2 der Mittenantriebsmaschine 1 als auch an einem Maschinengrundkörper 101 der Mittenbearbeitungsmaschine 100 festgelegt. Es kann jedoch auch vorgesehen werden, dass die YZ-Verschiebeeinheit 88 an lediglich einem der Maschinengrundkörper 2, 101 befestigt ist.

Eine dritte Handhabungseinrichtung 109 entnimmt das bearbeitete Werkstück aus der zweiten Bearbeitungszone 105 der Mittenbearbeitungsmaschine 100 und überführt dieses in eine Ausgabezelle 108. In der Ausgabezelle 108 ist ein Werkstückmagazin 110 vorgesehen, in dem die bearbeiteten Werkstücke abgelegt bzw. abgestellt werden. Die dritte Handhabungseinrichtung 109 ist wiederum auf einer YZ-Verschiebeeinheit 111 verfahrbar gelagert.

Die Zellen 106, 102, 107, 103 und 108 sind gegeneinander durch Trennwände abgeteilt. Verschließeinrichtungen öffnen die Abtrennungen zwischen den Zellen 106, 102, 107, 103 und 108 jeweils zur Durchfahrt der entsprechenden ersten, zweiten oder dritten Handhabungseinrichtung 80, 85, 109. Während der Bearbeitung der Werkstücke in den Bearbeitungszonen 104 und 105 sind die Handhabungseinrichtungen 80, 85, 109 aus den Bearbeitungszellen 102, 103 herausgefahren und die Verschlusseinrichtungen trennen die jeweiligen Zellen voneinander, so dass die Handhabungseinrichtungen nicht durch Bearbeitungsmittel und -rückstände beaufschlagt werden. Für Wartungs- und Reparaturarbeiten sind die Zellen 102, 107 durch vorderseitig angeordnete Türen zugängig.

In weiterer, nicht dargestellter Ausführung können eine, beide oder alle drei Handhabungseinrichtungen 80, 85, 109 dadurch ersetzt werden, dass an der entsprechenden Werkzeugeinheit 8, 10 auf dem Werkzeugrevolver 9, 11 eine Greifeinrichtung anstelle eines der Werkzeuge angeordnet ist. Mit der Greifeinrichtung lässt sich das Werkstück 7 greifen und in den Spannkopf 30 oder die Spanneinrichtung der Mittenbearbeitungsmaschine 100 einsetzen oder entnehmen, indem entweder die entsprechend modifizierte Werkzeugeinheit 8, 10 und/oder das Mittelaggregat 3 in Z-Richtung verfahren wird (entsprechend bei den Werkzeugeinheiten der Maschine 100 und deren Spanneinrichtung). Zum Transport des Werkstücks zwischen dem Werkstückmagazin 91 und der ersten Bearbeitungszone 102, zwischen der ersten Bearbeitungszone 102 und der Kontrollstation, zwischen der ersten und der zweiten Bearbeitungszone und/oder zwischen der zweiten Bearbeitungszone 102 und dem Werkstückmagazin ruhen die mit Greifeinrichtung(en) bestücke(n) Werkzeugeinheiten auf in Y-Richtung verlängerten YZ-Verschiebeeinheiten 89, 90 etc., um die Transportwege zwischen jeweils dem Werkstückmagazin 91, der ersten Bearbeitungszone 102, der zweiten Bearbeitungszone 104 und dem Werkstückmagazin 110 abzudecken.

In weiterer Ausgestaltung sind eine oder mehrere der Handhabungseinrichtungen 80, 85, 109 nicht auf der separaten YZ-Verschiebeeinheit 83, 88, 111 gelagert, sondern auf den YZ-Verschiebeeinheiten 89, 90 der Werkzeugeinheiten 8, 10 (für Mittenbearbeitungsmaschine 100 nicht dargestellt). Die Y-Fahrwege sind entsprechend verlängert, um die Werkzeugüberführung auszuführen.

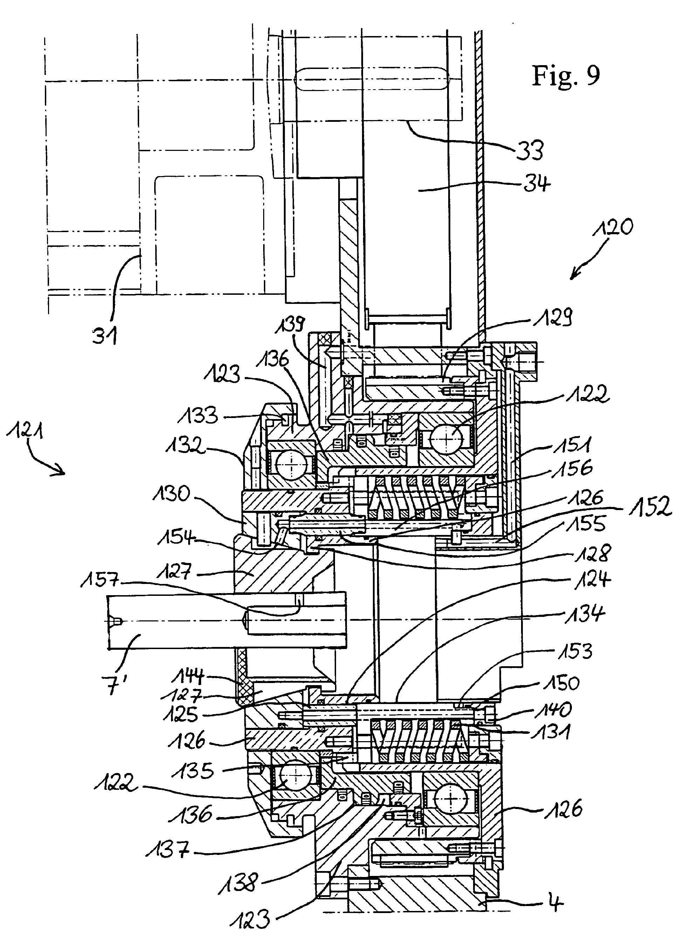

Fig. 9 zeigt eine Querschnittsansicht durch eine weitere Ausführungsform eines Spannfutterkopfes 121 für das Mittenaggregat 120 einer Mittenantriebsmaschine, bei dem im Unterschied zum Spannfutterkopf 30 von Fig. 2 lediglich ein Spannfutter vorgesehen ist. Das Mittelaggregat 120 ist wie das Mittelaggregat 3 über eine Konsole 4 an einem Maschinengrundkörper 2 gelagert (vgl. Fig. 1A bis 1D). Diagonal gegenüberliegend zur Konsole 4 ist ein Antrieb 31 mit einem Motorritzel 33 und einem Zahnrad 34 angeordnet. Das Zahnrad 34 greift in einen Außenzahnkranz 129 des an Kugellagern 122 drehbar gelagerten Spannkopfes 121. Für eine optimale Bearbeitungspräzision bei hoher Drehzahl kommen hier zwei Spindellager 122 mit zueinander geneigten Spannebenen zum Einsatz. Ein Motorgehäuse des Motors bzw. des Antriebs 31 sowie die Konsole 4 sind mit einem Spannfuttergehäuse 123 des Spannkopfes 121 verbunden. Die drehbaren Teile des Spannkopfes 121 sind im wesentlichen innerhalb einer an den Kugellagern 122 gelagerten Spindelwelle bzw. Haupthülse 126 angeordnet. Der Außenzahnkranz 129 ist an einer ringförmigen bzw. flanschartigen Erweiterung der Haupthülse 126 befestigt, so dass bei Antrieb des Außenzahnkranzes 129 die Haupthülse 126 in Rotation versetzt wird.

Innerhalb der Haupthülse 126 sind Spannfuttersegmente 127 eines Spannfutters angeordnet. Im dargestellten Beispiel bilden drei Segmente 127 die Spannzange, wobei die Segmente 127 untereinander durch eine elastische Zwischenlage 144, z.B. Gummi, miteinander verbunden sind. Die Zwischenlage 144 wird beim Spannen zusammengedrückt und beim Lösen der Spannzange (siehe unten) drückt die Zwischenlage 144 die Segmente 127 auseinander, so dass das Werkstück freigegeben wird. An der Außenseite der Spannfuttersegmente 127 sind Ausnehmungen vorgesehen, die mit einem nach innen vorspringenden Ringvorsprung 128 der Haupthülse 126 in Eingriff stehen, so dass die Segmente 127 bei einer radialen Verschiebung zum Klemmen bzw. Lösen eines Werkstücks 7' nicht in axiale Richtung verschoben werden. Weiterhin weisen die Spannfuttersegmente 127 einen teil-konischen Außenumfang auf, der mit einer Spann- bzw. Druckhülse 130 zusammenwirkt, die am Innenumfang einen Konus aufweist. Die Druckhülse 130 ist in axiale Richtung verschiebbar am Innenumfang der Haupthülse 126 gelagert. Eine axiale Verschiebung der Druckhülse 130 wird durch die Innen-/Außenflächenpaarung der Druckhülse 130 und der Segmente 127 in eine radiale Verschiebung der Segmente 127 umgesetzt.

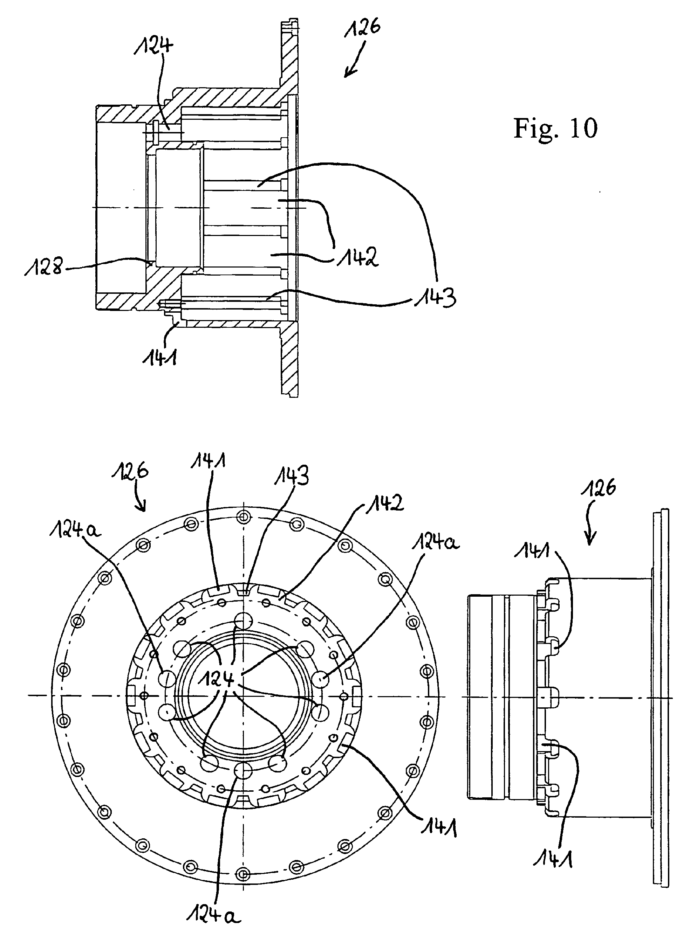

Die Haupthülse 126 weist mehrere axial verlaufende Öffnungen 124 auf (Fig. 10), durch die axial verschiebbare Mitnehmerstifte 125 verlaufen. Die durch die Haupthülse 126 führenden Mitnehmerstifte 125 sind jeweils an einem Ende (links in der Zeichenebene) mit der Druckhülse 130 verbunden, während jeweils das andere Ende der Mitnehmerstifte 125 (rechts in der Zeichenebene) mit einer Innenhülse 134 verbunden ist. Druckhülse 130, Mitnehmerstift 125 und Innenhülse 134 sind durch eine Schraube 140 zueinander fixiert und als Einheit innerhalb des Spannkopfes 121 axial verschiebbar.

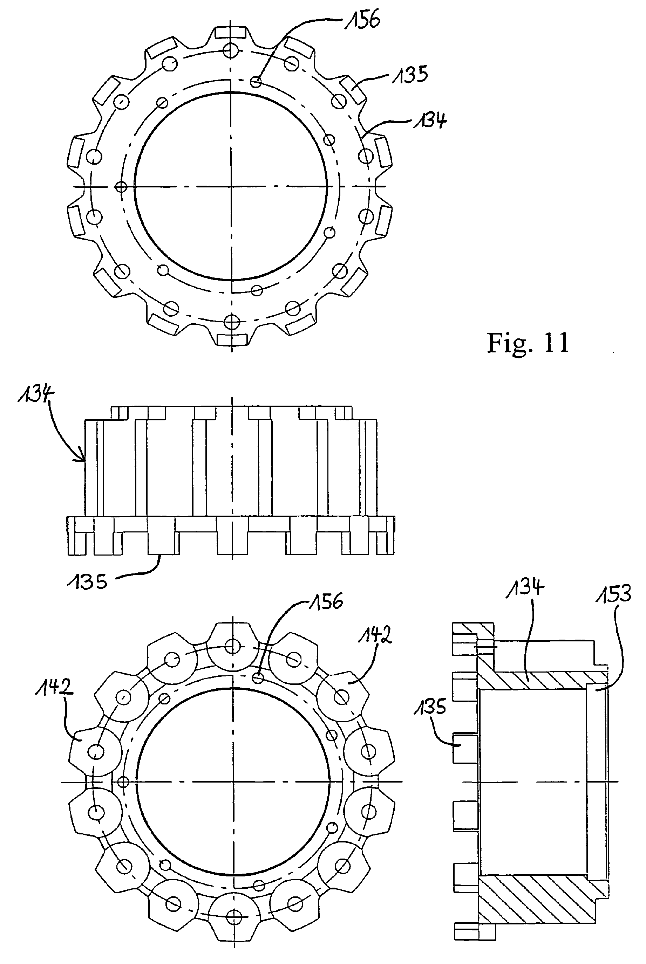

Zwischen der verschiebbaren Innenhülse 134 und der Haupthülse 126 sind in axiale Richtung wirkende Schraubenfedern 131 angeordnet, die aufgrund Ihrer Vorspannung die Innenhülse 134 bezüglich der Haupthülse 126 nach links verschiebt. Vierzehn Schraubenfedern 131 sind in Federkammern 142 (siehe Fig. 10 und 11) gefasst, deren Seitenbegrenzungen durch die Innenflächen der Haupthülse bzw. Hauptspindel 126 und die Außenflächen der Innenhülse 134 gebildet sind. Je nach gewünschtem Spanndruck durch die Spannsegmente 127 auf ein Werkstück 7' kann die Anzahl der Federn 131 ohne Veränderung des übrigen Aufbaus des Spannfutterkopfes 121 gewählt werden. Durch das federbetätigte Verschieben der Innenhülse 134 drückt die Druckhülse 130 die Spannsegmente 127 in radiale Richtung zusammen, so dass ein in der Öffnung des Spannfutters eingesetztes Werkstück 7' gespannt bzw. geklemmt wird.

Am Außenumfang der Innenhülse 134 erstrecken sich in axiale Richtung (in der Zeichenebene nach links) Anlagevorsprünge 135, auf die ein Mitnehmer eines Hubelements 136 wirkt. Die Anlagevorsprünge 135 sind durch Ausnehmungen 141 in der Haupthülse 126 hindurchgeführt (siehe Fig. 10). Das Hubelement 136 lagert drehfest im Spannfuttergehäuse 123 und ist hydraulisch betätigt in axiale Richtung relativ zum Spannfuttergehäuse 123 verschiebbar. Um ein im Spannkopf 121 eingespanntes Werkstück 7' zu lösen, wird in eine erste Kammer 137 zwischen dem Hubelement 136 und dem Gehäuse 123 Hydrauliköl eingepresst und so das Hubelement 136 axial verschoben (nach rechts in Fig. 9). Nach einem kurzen Verschiebeweg kommt der Mitnehmer des Hubelements 136 an den Anlagevorsprüngen 135 zur Anlage und bei weiterer Beaufschlagung mit Hydrauliköl verschiebt das Hubelement 136 die Innenhülse 134 nach rechts und gibt somit das Werkstück 7' frei. Ist ein neu zu bearbeitender Rohling 7' zwischen den Spannfuttersegmenten 127 eingeführt, wird aus der ersten Kammer 137 der Druck abgebaut, während in eine zweite Kammer 138 zwischen dem Hubelement 136 und dem Gehäuse 123 Hydrauliköl mit Druck eingeleitet wird. Dadurch setzt sich das Hubelement 136 axial in Bewegung (nach links in Fig. 9) und die Innenhülse 134 wird durch die Vorspannung der Schraubenfedern 131 nach links verschoben, bis aufgrund der Klemmung des Werkstücks 7' keine weitere Verschiebung der Innenhülse 134 mehr erfolgt. Danach wird das Hubelement 136 noch bis zu seinem Endanschlag verschoben, so dass während der Ausführung der Drehbewegung der Haupthülse 126 keine Berührung zwischen dem drehfesten Hubelement 136 und der sich mitdrehenden Innenhülse 134 vorhanden ist. Die Zufuhr des Hydrauliköls in die erste Kammer 137 erfolgt durch eine Fluidleitung 139, die durch das Gehäuse 123 verläuft und zu einem Anschluss zur externen Zufuhr des Hydrauliköls führt. Die Zufuhrleitung für die zweite Kammer 138 ist in einer Ebene versetzt zur Leitung 139 angeordnet und daher nicht dargestellt.

Wie in Fig. 9 dargestellt, ist am linksseitigen Ende der Haupthülse 126 eine ringförmige Abdeckscheibe 132 befestigt, die sich über das linksseitige Lager 122 erstreckt und einen Teilbereich des Spannfuttergehäuses 123 umgreift. Umfangsseitig ist zwischen der Abdeckscheibe 132 und dem Außenumfang des Gehäuses 123 eine Labyrinth- bzw. Spaltdichtung 133 angeordnet. Die Abdeckscheibe 132 verhindert ein Eindringen von Bearbeitungsrückständen in den Lagerbereich des Mittelaggregats 120.

Zur Reinigung und/oder Kühlung des Werkstücks 7' und des Spannkopfes 121 wird über eine an der rechten Innenseite des Spannkopfes 121 angeordnete Medienhülse 150 Kühl- oder Spülflüssigkeit bis zu den Spannfuttersegmenten 127 zugeführt. Eine Zuleitung 151 ist fest mit dem Gehäuse 123 verbunden und hat einen Flüssigkeitsanschluss. Die Wandung der Leitung 151 ist als Verbindungsbrücke zwischen dem Gehäuse 123 und der Medienhülse 150 ausgebildet, so dass die Medienhülse 150 drehfest in die Haupthülse 126 eingreift. Die Medienhülse 150 hat einen Überlappungsbereich mit der Innenhülse 134 und führt über eine Innenleitung 152 einer in der Innenhülse 134 ausgebildeten Ringnut 153 Flüssigkeit zu. Aufgrund der hohen Drehzahlen ist zwischen der Innenhülse 134 und der Medienhülse keine Gleitdichtung, sondern eine Spaltdichtung vorgesehen, die zu einem geringen Flüssigkeitsverlust im Übergangsbereich führt. Innerhalb der Innenhülse 134 verläuft eine Bohrung 156, die mit der Ringnut 153 verbunden ist, durch eine Leitungshülse 155 verlängert und bis in die Druckhülse 130 eingeführt ist. Die Druckhülse 130 hat einen Auslass 154, durch den die Flüssigkeit an die Spannfuttersegmente 127 geführt wird. Die Leitungshülsen 155 sind durch Öffnungen 124a geführt, die auf dem gleichen Umfang wie die Öffnungen 124 für die Mitnehmerstifte 125 angeordnet sind (Fig. 10).

Bei dem in Fig. 9 dargestellten Werkstück 7' ist eine Radialbohrung 157 vorhanden, die während der Bearbeitung nicht verunreinigt werden darf. Daher wird anstelle der Kühlflüssigkeit oder zusätzlich ein Fluid vom Auslass 154 in der Druckhülse 130 durch nicht näher dargestellte, radial verlaufende Kanäle in den Segmenten 127 bis zu deren Innenwand eingeführt. Vom Austritt an der Innenwand der Segmente 127 tritt das Fluid (z.B. Schmieröl) dann in die Radialbohrungen 157 (nur eine dargestellt) des Werkstücks 7' und spült diese dadurch während der Bearbeitung frei.

Durch eine Handhabungseinrichtung (vgl. zum Beispiel die Bezugszeichen 80 und/oder 85 in Fig. 8) mit einem 3-Backenfutter wird das Werkstück 7' in den Spannsegmentsatz 127 von hinten (von rechts in Fig. 9) zugeführt und/oder daraus entnommen. Das Werkstück 7' wird von hinten gebohrt, ausgedreht und rolliert (rechtes Ende), während von links eine Zentrierung in das linke Werkstückende eingebracht wird. Die Bearbeitung beider Seiten in einer Spannung ermöglicht eine hochpräzise Ausrichtung bei der Weiterbearbeitung des Werkstücks in einer weiteren Bearbeitungsmaschine, in der dann das Werkstück durch zentriertes Einspannen an beiden Enden am Außenumfang präzise zu den Innenflächen bearbeitbar ist. Beispielsweise ist die Bearbeitungsmaschine Nr. 1 in Fig. 8 eine Mittenantriebsmaschine und die Bearbeitungsmaschine Nr. 100 eine Schleifmaschine mit Einspannung zwischen einer Spindel und einer Pinole.

## Patentansprüche

1. Mittenantriebsmaschine zur beidseitigen Endenbearbeitung eines Werkstücks, mit
einem Maschinengestell (2),
einem am Maschinengestell (2) gelagerten Mittenantrieb (3), wobei der Mittenantrieb eine angetriebene Einspanneinrichtung (30; 121) zum Einspannen und Antreiben eines zu bearbeitenden Werkstücks (7; 7') aufweist, und
eine innerhalb der Einspanneinrichtung (30; 121) angeordnete Betätigungseinrichtung (57-62; 125, 130, 131, 134, 136) zum automatischen Einspannen und Lösen eines Werkstücks;
wobei der Mittenantrieb (3) als Einzelkopf ausgebildet ist, mit dem ein zu bearbeitendes Werkstück (7, 7') frei spannbar und antreibbar ist, und
wobei die Rotationsachse des Mittenantriebs (3) vertikal ausgerichtet ist.

2. Mittenantriebsmaschine nach Anspruch 1, **gekennzeichnet durch** zumindest eine Pinole (12, 13) oder einen Dom, die oder der in Rotationsachsenrichtung (Z) verfahrbar und dem Ende eines Werkstücks (7; 7') zustellbar ist.

3. Mittenantriebsmaschine nach Anspruch 1 oder 2, wobei der Mittenantrieb (3) in Rotationsachsenrichtung (Z) verfahrbar gelagert ist.

4. Mittenantriebsmaschine nach einem der Ansprüche 1 bis 3, **gekennzeichnet durch** zumindest eine Werkzeugeinheit (8, 10), die wahlweise dem ersten oder dem zweiten Ende eines im Mittenantrieb (3) eingespannten Werkstücks (7; 7') zustellbar ist.

5. Mittenantriebsmaschine nach einem der Ansprüche 1 bis 4, **gekennzeichnet durch** zumindest eine Handhabungseinrichtung (80, 85) zum Greifen eines Werkstücks (7; 7'), zum Zuführen des Werkstücks zur Einspanneinrichtung (30; 121) und zum Entnehmen des Werkstücks aus der Einspanneinrichtung.

6. Mittenantriebsmaschine nach Anspruch 5, wobei die zumindest eine der Handhabungseinrichtungen (80, 85) in Rotationsachsenrichtung (Z) verfahrbar ist.

7. Anordnung von nebeneinander stehenden Vertikal-Bearbeitungsmaschinen (1, 100), mit einer Mittenantriebsmaschine (1) nach einem der Ansprüche 1 bis 6, wobei ein Werkstück (7, 7') bei vertikaler Ausrichtung des Werkstücks in jeder der Vertikal-Bearbeitungsmaschinen bearbeitbar ist, **gekennzeichnet durch** eine zwischen den Bearbeitungsmaschinen (1, 100) angeordnete, erste Handhabungseinrichtung (85), mit der das Werkstück (7) von einer ersten Bearbeitungszone (104) in der ersten Bearbeitungsmaschine (1) zu einer zweiten Bearbeitungszone (105) in der zweiten Bearbeitungsmaschine (100) überführbar ist, wobei die erste Handhabungseinrichtung (85) auf einer zwischen den Bearbeitungsmaschinen (1, 100) verfahrbaren Verschiebeeinheit (88) angeordnet ist.

8. Mittenantriebsmaschine nach einem der Ansprüche 1 bis 6, mit einem Spannfutterkopf zum Einspannen eines zu bearbeitenden Werkstücks, wobei der Spannfutterkopf (30; 121) aufweist:
ein drehbar gelagertes Spannfutter mit einem ersten Satz (51; 127) Spannsegmente zum Klemmen eines Werkstücks (7, 7') an einem ersten Umfangsbereich (I),
eine selbsttätige Betätigungseinrichtung (57-62; 125, 130, 131, 134, 136) zum Betätigen des ersten Spannsegmentsatzes (51; 127), wobei die Betätigungseinrichtung zumindest ein Federelement (57; 131) aufweist, das aufgrund seiner Vorspannung den ersten Spannsegmentsatz (51; 127) zum Klemmen eines Werkstücks (7, 7') schließt; und
eine Haupthülse (50; 126), in der der erste Spannsegmentsatz angeordnet ist, wobei die Haupthülse an zwei axial voneinander beabstandeten Lagern (36; 122) drehbar im Spannfutterkopf (30; 121) gelagert ist;
wobei die Betätigungseinrichtung (57-62; 125, 130, 131, 134, 136) in axialer Richtung im Wesentlichen zwischen den beiden Lagern (36; 122) oder im Bereich der Lager angeordnet ist.

9. Mittenantriebsmaschine nach Anspruch 8, wobei der Spannfutterkopf (30) einen in der Haupthülse (50) angeordneten, zweiten Spannsegmentsatz (52) zum Klemmen des Werkstücks (7) an einem zweiten Umfangsbereich (II), der in axiale Richtung zum ersten Umfangsbereich (I) beabstandet ist, aufweist.

10. Mittenantriebsmaschine nach Anspruch 9, wobei beide Spannsegmentsätze (51, 52) mittels der Betätigungseinrichtung (57-62) betätigbar sind.

11. Mittenantriebsmaschine nach einem der Ansprüche 8, 9, oder 10, wobei das zumindest eine Federelement (57; 131) aufgrund seiner Vorspannung die Spannsegmente (51, 52; 127) zum Klemmen eines Werkstücks (7) schließt.

12. Mittenantriebsmaschine nach einem der Ansprüche 8 bis 11, wobei die Betätigungseinrichtung (57-62; 125, 130, 131, 134, 136) einen Aktuator (58, 59; 136) aufweist, der zum Lösen der Spannsegmente (51, 52; 127) auf das zumindest eine Federelement (57; 131) wirkt.

13. Mittenantriebsmaschine nach Anspruch 12, wobei der Aktuator (58, 59; 136) innerhalb eines drehfesten Gehäuses (37; 123) des Spannfutterkopfes (30; 121) verschiebbar gelagert und hydraulisch betätigbar ist.

14. Mittenantriebsmaschine nach Anspruch 12 oder 13, wobei der Aktuator (58, 59; 136) auf zumindest ein axial verschiebbares Spannelement (54, 55; 130) und über dieses auf den Spannsegmentsatz (51, 52; 127) wirkt.

15. Mittenantriebsmaschine nach einem der Ansprüche 8 bis 14, wobei zumindest an einer Seite des Spannfutterkopfes (30; 121) der Spannsegmentsatz (54, 55) austauschbar und/oder entnehmbar montiert ist.

16. Mittenantriebsmaschine nach einem der Ansprüche 8 bis 15, wobei die Haupthülse (50) mittels eines Aufsatzes (65) verlängerbar ist, wobei insbesondere der austauschbare und/oder entnehmbare Spannsegmentsatz (54, 55) im Aufsatz montierbar ist.

## Claims

1. Center drive machine for two-sided end processing of a workpiece, having
a machine frame (2),
a center drive (3) supported on the machine frame (2), wherein the center drive has a driven clamping device (30; 121) for clamping and driving a workpiece (7; 7') to be processed, and
an actuating device (57-62; 125, 130, 131, 134, 136) disposed within the clamping device (30; 121) for automatically clamping and releasing a workpiece;
wherein the center drive (3) is formed as a single head, by which a workpiece (7, 7') to be processed can be freely clamped and driven, and
wherein the rotation axis of the center drive (3) is vertically oriented.

2. Center drive machine according to claim 1, **characterized by** at least one quill (12, 13) or a mandrel, which is movable in rotation axis direction (Z) and can be positioned to the end of a workpiece (7; 7').

3. Center drive machine according to claim 1 or 2, wherein the center drive (3) is supported movably in rotation axis direction (Z).

4. Center drive machine according to any one of claims 1 to 3, **characterized by** at least one tool unit (8, 10) which can selectively be fed to the first or the second end of a workpiece (7; 7') clamped in the center drive (3).

5. Center drive machine according to any one of claims 1 to 4, **characterized by** at least one handling device (80, 85) for gripping a workpiece (7; 7'), for feeding the workpiece to the clamping device (30; 121) and for removing the workpiece from the clamping device.

6. Center drive machine according to claim 5, wherein the at least one of the handling devices (80, 85) is movable in rotation axis direction (Z).

7. Assembly of juxtaposed vertical processing machines (1, 100) having a center drive machine (1) according to any one of claims 1 to 6, wherein a workpiece (7, 7') can be processed with vertical orientation of the workpiece in each of the vertical processing machines, **characterized by** a first handling device (85) disposed between the processing machines (1, 100), by which the workpiece (7) can be transferred from a first processing zone (104) in the first processing machine (1) to a second processing zone (105) in the second processing machine (100), wherein the first handling device (85) is disposed on a displacing unit (88) movable between the processing machines (1, 100).

8. Center drive machine according to any one of claims 1 to 6, having a chuck head for clamping a workpiece to be processed, wherein the chuck head (30; 121) comprises:
a rotatably supported chuck with a first set (51; 127) of clamping segments for clamping a workpiece (7, 7') on a first circumferential region (I),
an automatic actuating device (57-62; 125, 130, 131, 134, 136) for actuating the first clamping segment set (51; 127), wherein the actuating device has at least one spring element (57; 131), which closes the first clamping segment set (51; 127) for clamping a workpiece (7, 7') due to its preload; and
a main sleeve (50; 126), in which the first clamping segment set it disposed, wherein the main sleeve is rotatably supported in the chuck head (30; 121) by two bearings (36; 122) axially spaced apart;
wherein the actuating device (57-62; 125, 130, 131, 134, 136) is disposed in axial direction substantially between the two bearings (36; 122) or in the region of the bearings.

9. Center drive machine according to claim 8, wherein the chuck head (30) has a second clamping segment set (52) disposed in the main sleeve (50) for clamping the workpiece (7) on a second circumferential region (II) spaced apart from the first circumferential region (I) in axial direction.

10. Center drive machine according to claim 9, wherein both clamping segment sets (51, 52) are capable of being actuated by means of the actuating device (57-62).

11. Center drive machine according to any one of claims 8, 9 or 10, wherein the at least one spring element (57; 131) closes the clamping segments (51, 52; 127) for clamping a workpiece (7) due to its preload.

12. Center drive machine according to any one of claims 8 to 11, wherein the actuating device (57-62; 125, 130, 131, 134, 136) has an actuator (58, 59; 136), which acts on the at least one spring element (57; 131) for releasing the clamping segments (51, 52; 127).

13. Center drive machine according to claim 12, wherein the actuator (58, 59; 136) is displaceably supported within a rotationally fixed housing (37; 123) of the chuck head (30; 121) and capable of being hydraulically actuated.

14. Center drive machine according to claim 12 or 13, wherein the actuator (58, 59; 136) acts on at least one axially displaceable clamping element (54, 55; 130) and, via it, on the clamping segment set (51, 52; 127).

15. Center drive machine according to any one of claims 8 to 14, wherein at least on one side of the chuck head (30; 121), the clamping segment set (54, 44) is mounted in replaceable and/or removable manner.

16. Center drive machine according to any one of claims 8 to 15, wherein the main sleeve (50) is extendable by means of an attachment (65), wherein in particular the replaceable and/or removable clamping segment set (54, 55) is mountable in the attachment.

## Revendications

1. Machine-outil à entraînement central pour l'usinage des extrémités de part et d'autre d'une pièce, avec
un bâti de machine (2),
un entraînement central (3) monté sur le bâti de machine (2), sachant que l'entraînement central présente un dispositif de serrage entraîné (30 ; 121) pour serrer et entraîner une pièce (7 ; 7') à usiner, et
un dispositif d'actionnement (57-62 ; 125, 130, 131, 134, 136) disposé à l'intérieur du dispositif de serrage (30 ; 121), pour serrer et desserrer automatiquement une pièce ; sachant que l'entraînement central (3) est réalisé sous forme de tête individuelle, qui permet de serrer et d'entraîner librement une pièce (7 ; 7') à usiner, et
sachant que l'axe de rotation de l'entraînement central (3) est orienté verticalement.

2. Machine-outil à entraînement central selon la revendication 1, **caractérisée par** au moins un fourreau (12, 13) ou un mandrin, qui peut être déplacé dans la direction de l'axe de rotation (Z) et qui peut être approché de l'extrémité d'une pièce (7 ; 7').

3. Machine-outil à entraînement central selon la revendication 1 ou 2, sachant que l'entraînement central (3) est monté à déplacement dans la direction de l'axe de rotation (Z).

4. Machine-outil à entraînement central selon l'une des revendications 1 à 3, **caractérisée par** au moins une unité d'outil (8, 10) qui peut être approchée sélectivement de la première ou de la deuxième extrémité d'une pièce (7 ; 7') serrée dans l'entraînement central (3).

5. Machine-outil à entraînement central selon l'une des revendications 1 à 4, **caractérisée par** au moins un dispositif de manipulation (80, 85) pour saisir une pièce (7 ; 7'), pour apporter la pièce au dispositif de serrage (30 ; 121) et pour retirer la pièce du dispositif de serrage.

6. Machine-outil à entraînement central selon la revendication 5, sachant qu'au moins un des dispositifs de manipulation (80, 85) peut être déplacé dans la direction de l'axe de rotation (Z).

7. Ensemble de machines d'usinage verticales juxtaposées (1, 100), comprenant une machine-outil (1) à entraînement central selon l'une des revendications 1 à 6, sachant qu'une pièce (7 ; 7') peut, avec une orientation verticale de la pièce, être usinée dans chacune des machines d'usinage verticales, **caractérisé par** un premier dispositif de manipulation (85), disposé entre les machines d'usinage (1, 100), avec lequel la pièce (7) peut être transférée d'une première zone d'usinage (104) dans la première machine d'usinage (1) vers une deuxième zone d'usinage (105) dans la deuxième machine d'usinage (100), sachant que le premier dispositif de manipulation (85) est disposé sur une unité de translation (88) pouvant être déplacée entre les machines d'usinage (1, 100).

8. Machine-outil à entraînement central selon l'une des revendications 1 à 6, comprenant une tête de mandrin de serrage pour serrer une pièce à usiner, sachant que la tête de mandrin de serrage (30 ; 121) présente :
un mandrin de serrage monté à rotation, avec un premier groupe (51 ; 127) de segments de serrage pour serrer une pièce (7 ; 7') sur une première région périphérique (I),
un dispositif d'actionnement automatique (57-62 ; 125, 130, 131, 134, 136) pour actionner le premier groupe (51 ; 127) de segments de serrage, sachant que le dispositif d'actionnement présente au moins un élément de ressort (57 ; 131) qui, en raison de sa précontrainte, ferme le premier groupe (51 ; 127) de segments de serrage pour serrer une pièce (7 ; 7') ; et
une douille principale (50 ; 126) dans laquelle est disposé le premier groupe de segments de serrage, sachant que la douille principale est montée à rotation dans la tête de mandrin de serrage (30 ; 121) sur deux paliers (36 ; 122) axialement distants l'un de l'autre,
sachant que le dispositif d'actionnement (57-62 ; 125, 130, 131, 134, 136) est disposé en direction axiale pour l'essentiel entre les deux paliers (36 ; 122) ou dans la région des paliers.

9. Machine-outil à entraînement central selon la revendication 8, sachant que la tête de mandrin de serrage (30) présente un deuxième groupe (52) de segments de serrage, disposé dans la douille principale (50), pour serrer la pièce (7) sur une deuxième région périphérique (II) qui est distante en direction axiale de la première région périphérique (I).

10. Machine-outil à entraînement central selon la revendication 9, sachant que les deux groupes (51, 52) de segments de serrage peuvent être actionnés au moyen du dispositif d'actionnement (57-62).

11. Machine-outil à entraînement central selon l'une des revendications 8, 9 ou 10, sachant que l'élément de ressort au moins unique (57 ; 131), en raison de sa précontrainte, ferme les segments de serrage (51, 52 ; 127) pour serrer une pièce (7).

12. Machine-outil à entraînement central selon l'une des revendications 8 à 11, sachant que le dispositif d'actionnement (57-62 ; 125, 130, 131, 134, 136) présente un actionneur (58, 59 ; 136) qui, pour desserrer les segments de serrage (51, 52 ; 127), agit sur l'élément de ressort au moins unique (57 ; 131).

13. Machine-outil à entraînement central selon la revendication 12, sachant que l'actionneur (58, 59 ; 136) est monté à translation à l'intérieur d'un boîtier bloqué en rotation (37 ; 123) de la tête de mandrin de serrage (30 ; 121), et peut être actionné hydrauliquement.

14. Machine-outil à entraînement central selon la revendication 12 ou 13, sachant que l'actionneur (58, 59 ; 136) agit sur au moins un élément de serrage (54, 55 ; 130) mobile en translation axiale, et par l'intermédiaire de ce dernier sur le groupe (51, 52 ; 127) de segments de serrage.

15. Machine-outil à entraînement central selon l'une des revendications 8 à 14, sachant que le groupe (54, 55) de segments de serrage est monté avec possibilité de remplacement et/ou de dépose au moins sur un côté de la tête de mandrin de serrage (30 ; 121).

16. Machine-outil à entraînement central selon l'une des revendications 8 à 15, sachant que la douille principale (50) peut être prolongée au moyen d'un élément rapporté (65), sachant notamment que le groupe (54, 55) de segments de serrage pouvant être remplacé et/ou déposé peut être monté dans l'élément rapporté.
